Europäisches Patentamt

European Patent Office

Office européen des brevets

(19)

(11) Publication number: **0 169 667**

**A1**

(12) **EUROPEAN PATENT APPLICATION**

(21) Application number: 85304465.9

(22) Date of filing: 21.06.85

(51) Int. Cl.⁴: **B 24 B 33/02**

(30) Priority: **27.06.84 GB 8416380**

(43) Date of publication of application:
**29.01.86 Bulletin 86/5**

(84) Designated Contracting States:
**DE FR IT**

(71) Applicant: **AE PLC**
**Cawston House Cawston**
**Rugby Warwickshire CV22 7SB(GB)**

(72) Inventor: **Slee, Roger Harvey**
**28 Oakwood Grove**
**Isobel Percy Estate Warwick CV34 5DT(GB)**

(74) Representative: **Knott, Stephen Gilbert et al,**
**MATHISEN, MACARA & CO. The Coach House 6-8**
**Swakeleys Road**
**Ickenham Uxbridge Middlesex UB10 8BZ(GB)**

(54) Improvements in or relating to honing devices.

(57) Cylinders (57) are manufactured to an oval shape, which is defined as being an oval where the ratio of the major axis to the minor axis is between 1.1:1 and 3:1. Cylinders are generally finished by a honing machine but, in general, conventional honing machines cannot hone such oval profiles at commercial production rates. Disclosed is a honing machine for finishing such oval cylinders where the honing stones (52) are constrained always to bear against the surface of the cylinder with a constant force, regardless of their position relative to a central shaft (50) through which they are rotated.

FIG 1

EP 0 169 667 A1

## IMPROVEMENTS IN OR RELATING TO HONING DEVICES

The invention relates to honing devices.

An in-line engine for an internal combustion engine comprises a cylinder block having a number of cylinders of generally circular cross-section arranged in succession along the length of the block; this length being determined by the cooling requirements of the cylinders and the diameters of the cylinders. Any increase in the cylinder diameter, to produce an engine of greater cubic capacity and thus of greater power, will increase the length of the block. Any such increase in the length of the block is also disadvantageous because it necessitates a more expensive crankshaft construction and an increase in the required size of an engine-receiving compartment in an associated vehicle. Alternatively, it necessitates the use of a more expensive "vee" cylinder arrangement.

It is possible to increase the swept volume of the cylinders, and hence increase the power of the engine, by making the cylinders, and their associated pistons, of oval cross-section with the major axis of such a section extending normal to the length of the engine block. As used throughout this specification, a reference to "oval" or to particular forms of oval, such as ellipses, is defined as a reference to an oval where the ratio of the major axis to the minor axis is between 1.1:1 and 3:1, except where the context expressly provides otherwise. The use of oval cylinders or pistons can therefore increase the swept volume of the engine by between 10% and 300% without any increase in the length of the engine block. In addition, the larger cylinder area allows a more favourable disposition inlet and outlet ports and inlet and outlet valves of greater diameter than can be used with generally circular section cylinders and pistons, so improving the breathing of the engine.

In general, pistons and cylinders (whether oval or not) are produced by casting the cylinders and pistons roughly to shape and then by finishing the cylinders and pistons to their final form. In the case of a cylinder, this generally comprises a boring operation using a machine tool followed by a honing operation to give the bore a suitable surface topography to ensure reliable lubrication.

While all these operations have been performed satisfactorily for many years in respect of cylinders that are right cylindrical or substantially right cylindrical, by the use of conventional boring and honing tools. In general such machine tools cannot cope with cylinders and other surfaces which are oval in cross-section, because the required range of movement cannot be achieved at speeds which allow the commercial production of such cylinders and surfaces of significantly oval shape.

According to a first aspect of the invention, there is provided a honing device for finishing a surface of oval cross-section, the honing device comprising a plurality of honing stones angularly spaced around a rotatable member for engagement with an oval section surface, each honing stone being movable inwardly and outwardly relative to the axis of rotation of the member and the number and movements of the honing stones on rotation of the member being such that the honing stones follow the contour of the surface with a constant outward pressure against the surface to provide even honing of the surface.

The following is a more detailed description of an embodiment of the invention, by way of example, reference being made to the accompanying drawings in which:-

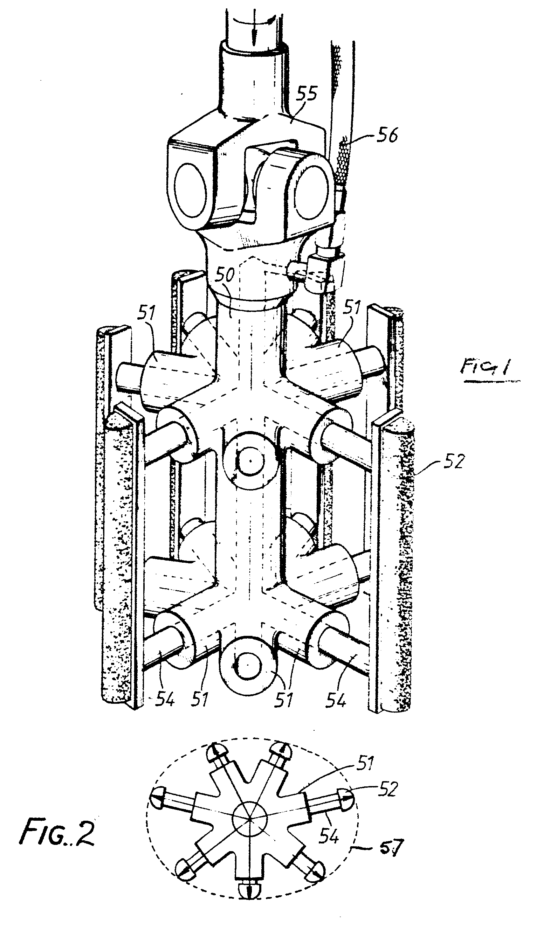

Figure 1 is a perspective view of a honing device for honing the interior of an oval cylinder block, and

Figure 2 is a plan view of the honing device of Figure 1 showing the device honing the interior of an oval cylinder.

The honing device comprises a hollow central shaft 50 provided with seven pairs of radially extending tubes 51 the pairs being equiangularly spaced around the hollow shaft 50. The tubes of each pair are axially spaced, one being towards the lower end of the shaft 50 and the other being towards the upper end of the shaft 50. The interiors of the tubes 51 communicate with the interior of the shaft 50.

Seven elongate honing stones 52 are provided each mounted on a pair of rods, with the rods 54 of each honing stone being received in one of the pairs of tubes 51. Coil springs (not shown) may be fitted between the tubes and the honing stones to assist in urging the honing stones outwardly.

In use, the shaft 50 is inserted into the oval cylinder 57 and is rotated by means of a universal joint 55. Oil under pressure is supplied to the interior of the shaft 51 by a supply line 56. The pressurized oil forces the stones 52 outwardly against the interior of the piston as the honing stones rotate.

With seven honing stones, the volume of oil within the shaft and the tubes remains substantially constant as the stones moves inwardly and outwardly during their rotation around the oval interior of the cylinder. This means that each stone is forced against the cylinder with a constant force thus providing an even honing action.

The honing device is reciprocated up and down the interior of the cylinder, while rotating, to perform finishing grinding. The stones are provided with a strong curvature on their apex to allow for variation in the stone approach angle relative to the interior of the cylinder.

The number of stones need not be seven, there may, for example, be only five stones. In addition, although the sones 52 are shown applying outward pressure, the arrangement may be reversed to provide a cylindrical reservoir (corresponding to the shaft 50) and a number of inwardly directed stones 52 for honing an exterior surface of oval cross-section.

15PM73:4

## CLAIMS

1.    A honing device for finishing a surface of oval cross-section, the honing device comprising a plurality of honing stones (52) carried on a a rotatable member (50) for engagement with the surface, characterised in that the honing stones (52) are equiangularly spaced around the member (50), each honing stone (52) being movable inwardly and outwardly relative to the axis of rotation of the member (50) and the number and movements of the honing stones on rotation of the member being such that the honing stones follow the contour of the surface with a constant outward pressure against the surface to provide even honing of the surface.

2.    A honing device according to claim 1 and for finishing an interior surface of a cylinder of oval cross-section, characterised in that the rotatable member comprises a shaft (50) which carries said honing stones (52), the shaft and the honing stones being insertable into said cylinder and the honing stones being urged outwardly into contact with said interior surface of the cylinder.

3.    A honing device according to claim 2, characterised in that each honing stone (52) is mounted on a shaft (54) which is reciprocable in an associated tube (51), the tube (51) being in fluid connection with the shaft (50), which is hollow, the shaft and the tube being filled with a fixed quantity of hydraulic fluid under pressure, so that during rotation of the shaft and honing stones, inward movement of a honing stone forces hydraulic fluid into the shaft from whence the hydraulic fluid passes to the tube (51) of a honing stone moving outwardly, to maintain said constant force on each honing stone.

4.    A honing device according to claim 3, characterised in that there are seven honing stones (52) equiangularly spaced around the shaft (50).

15PM73:4

0169667

Fig 1

Fig. 2

0169667
Application number

**EUROPEAN SEARCH REPORT**

European Patent Office

| | DOCUMENTS CONSIDERED TO BE RELEVANT | | EP 85304465.9 |
|---|---|---|---|

| Category | Citation of document with indication. where appropriate, of relevant passages | Relevant to claim | CLASSIFICATION OF THE APPLICATION (Int Cl 4) |
|---|---|---|---|
| X | FR - A - 2 183 480 (GEHRING) <br> * Totality * | 1-4 | B 24 B 33/00 |
| X | US - A - 3 851 422 (DOJYO) <br> * Totality * | 1-4 | |
| X | US - A - 3 913 283 (KOGYO) <br> * Totality * | 1-4 | |
| A | DE - C - 805 987 (BERSTECHER) <br> * Fig. 1-4 * | 1-4 | |

**TECHNICAL FIELDS SEARCHED (Int Cl 4)**

B 24 B 33/00

The present search report has been drawn up for all claims

| Place of search <br> VIENNA | Date of completion of the search <br> 17-10-1985 | Examiner <br> FUCHS |
|---|---|---|

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

& : member of the same patent family, corresponding document

EPO Form 1503 03 82